# EUROPEAN PATENT SPECIFICATION

(11) **EP 1 810 915 B1**
(45) Date of publication and mention of the grant of the patent: **11.11.2009**
(21) Application number: 07000785.1
(22) Date of filing: 16.01.2007
(51) Int. Cl.: B62J 15/02

(54) **Safety release member, particularly for single stay and mudguard**
Sicherheitsauslösevorrichtung insbesondere für Stützstange und Schutzblech
Dispositif de déclenchement de sécurité en particulier pour tringle de support et garde-boue

(30) Priority: 19.01.2006 IT VI20060021
(43) Date of publication of application: 25.07.2007
(73) Proprietor: Passuello, Ivan, 31020 San Zenone Degli Ezzelini TV (IT)
(72) Inventor: Passuello, Ivan, 31020 San Zenone Degli Ezzelini TV (IT)
(74) Representative: Bettello, Pietro

(56) References cited:
- EP-A- 1 036 731
- EP-A- 1 151 911
- DE-A1- 10 238 652
- GB-A- 819 048
- JP-A- 10 007 055
- NL-C2- 1 022 857

## Description

The present finding refers to a safety release member, particularly for single stay and mudguard, usable in the assemblage of mudguards of velocipedes and motorbikes.

As is known, the mudguards of cycle vehicles are usually installed on suitable supports, attached to the frame of the vehicles and composed of pairs of stays arranged on the opposite ends of each hub; the tops of the stays are fixed by means of adequate coupling devices. Such coupling devices can have different conformations, ranging from rudimentary clips to be fixed directly on the mudguard by means of screws to more or less advanced clamps made of moulded synthetic material and generally composed of two portions hinged together, capable of simultaneously clamping the support stay and the mudguard edge due to the tightening of a screw.

This solution type has various drawbacks tied to the use of screws which in addition to being subject to oxidation, with consequent damage of the entire structure from an aesthetic standpoint, considerably lengthen the assembly times, rendering such devices little competitive from a price standpoint.

To solve the abovementioned drawbacks, other more conceptually-advanced fixing devices were developed, consisting of a male body and a female body which can be coupled together, either by fitting or rotation, permitting coupling the support stays to the mudguards without the aid of screws.

The documents EP-A-1036731 and JP10007055 describe mudguard/stay release devices comprising a main body, removably engageable with said mudguard, said body comprising fit coupling means for removably engaging said single stay to said main body. JP10007055 describes all the features of the preamble of claim 1.

While solving part of the previously mentioned drawbacks, the devices just described require, however, working and assembly times which in some cases can be too high. Moreover, it should be pointed out that all of these devices are conceived for the use of separate support stays, categorically excluding a single, "U"-shaped fork stay as support, which is undoubtedly structurally safer and stronger.

The task which the finding proposes is that of solving the abovementioned problems, making a safety release member particularly for a single stay and mudguard, which permits simultaneously engaging a mudguard with a single support stay without the aid of screws or accessories and in very reduced times.

In the scope of the abovementioned task, one particular object of the finding is that of making a safety release member which, while respecting the most recent laws on the matter, ensures the maximum safety for the user, also in cases which go beyond the normal use conditions.

Not the least object of the finding is that of making a safety release member which is simple to make and fast to install, being particularly advantageous from a purely economical standpoint.

The task set forth above, as well as the mentioned objects and others which will appear more evident below, are achieved by a safety release member, particularly for a single stay and mudguard, comprising a main body, which can be removably engaged to said mudguard, said main body comprising fit coupling means for removably engaging said single stay to said main body according to the characterising portion of claim 1.

Further characteristics and advantages will be clearer from the description of preferred but not exclusive embodiments of a safety release member according to the finding, of which the first is illustrated as indicative and not limiting in the set of drawings wherein:

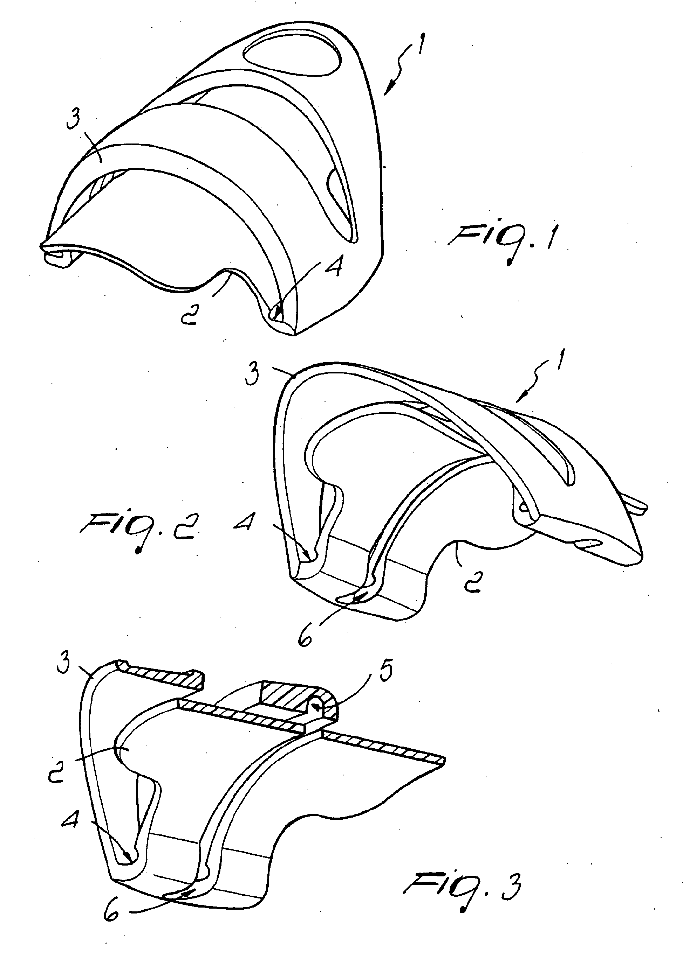

Figure 1 is a top perspective view of the safety release member according to the finding;
Figure 2 is a bottom perspective view of the safety release member according to the finding;
Figure 3 is a bottom perspective view, partially in section of the safety release member according to the finding;

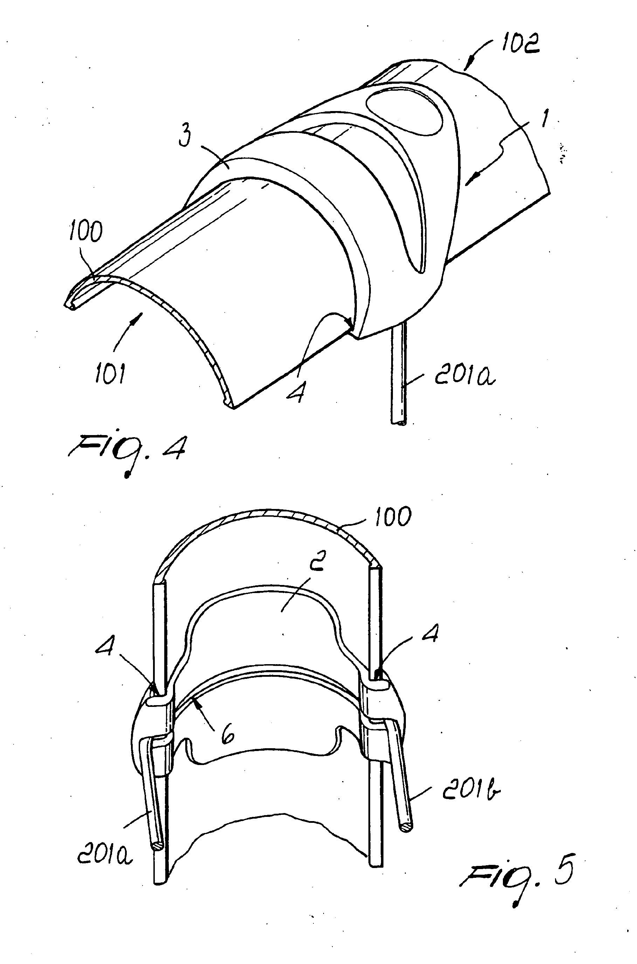

Figure 4 is a top perspective view of the safety release member according to the finding, attached to a mudguard and to a single stay;
Figure 5 is a bottom perspective view of the safety release member according to the finding, attached to a mudguard and to a single stay;

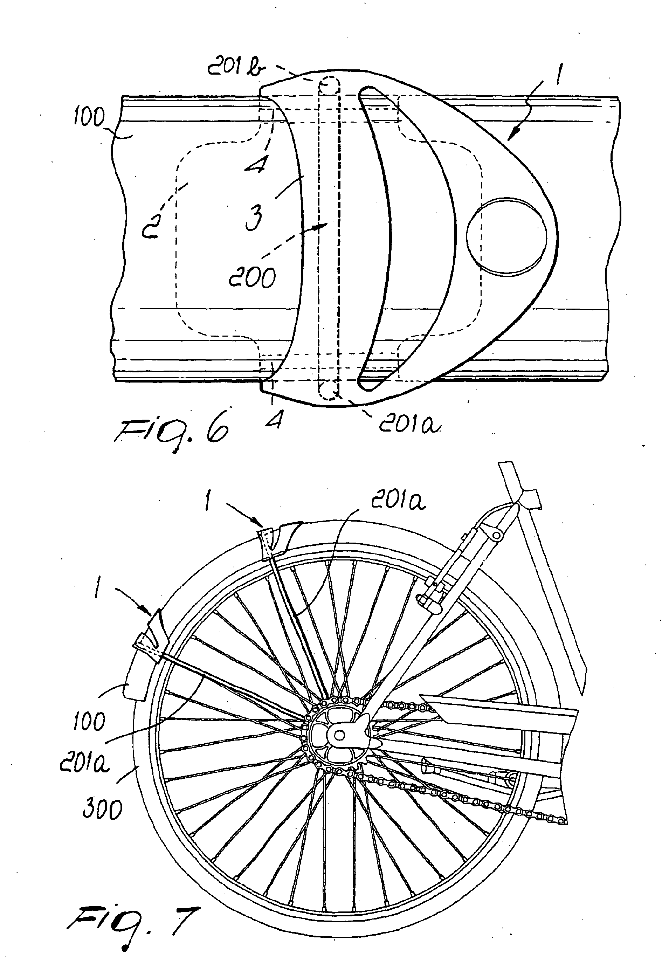

Figure 6 is a plan view of the safety release member according to the finding, attached to a mudguard and to a single stay;
Figure 7 is a side view of a bicycle portion and a use example of the safety release member according to the finding.

With reference to the mentioned figures, the safety release member, particularly for single stay and mudguard, indicated overall with the reference number 1, comprises, according to the finding, a main body which can be removably engaged with a mudguard 100 and is composed of an inner portion 2 and an outer portion 3, facing each other, united in a single body and made of moulded synthetic material. In particular, while the inner portion 2 is associable with the underside or concave part 101 of the mudguard 100, the outer portion 3 is associable to the back or convex part 102 of the mudguard 100.

Inside the main body, a guide 4 is present with cross section substantially complementary to the cross section of the mudguard 100, jointly defined by the inner portion 2 and the outer portion 3 so to permit associating the safety release member 1 with the mudguard 100 in a slidable manner. The related sliding can nevertheless be stopped by means of snap engagement means, not illustrated in the attached figures, advantageously composed of a pair of teeth defined inside the guide 4 and which can be snap-engaged with suitable notches defined on the mudguard 100, with form substantially complementary to that of the mentioned teeth. Alternatively to the pair of teeth just described, or to assist their action, the snap engagement means can also describe a projection, it too defined inside the guide 4 but this time in substantially central position, so it can be engaged with a slit of substantially matching conformation defined on the mudguard 100.

The main body moreover comprises fit coupling means at its interior, formed by a housing 5 defined transverse to the middle longitudinal axis of the safety release member 1 and shaped so to receive the head of the stay 200, which, in a single body with the pair of support stems 201a and 201b, composes the fork structure of the single stay, and by a slot 6 defined at the housing 5 and facing the latter, to which it is connected.

In a first embodiment of the safety release member 1, the slot 6 is defined on the inner portion 2, while the housing 5 is advantageously defined on the outer portion 3, thus avoiding the reduction of the opening between the mudguard and the tyre 100, with possible obstruction consequences.

In a second embodiment of the safety release member 1, not illustrated in the attached figures, the housing 5 is instead defined on the inner portion 2, while the slot 6 is defined on the outer portion 3.

The functioning of the safety release member according to the finding is the following.

In both embodiments, to assemble the mudguard 100 to the single stay, it suffices to insert the head of the stay 200 in the housing 5, making it pass through the slot 6, and subsequently associate the mudguard 100 with the guide 4, making it slide until the pair of teeth or the projection, which compose the snap engagement means, is snap-engaged, respectively with the suitable notches or with the slit made in the mudguard 100.

In this manner, even if the single stay is engaged with the mudguard 100 in the normal use conditions, conferring the necessary stability to the entire structure, possible forces which by chance act on the stems 201 would cause the disengagement of the snap engagement means, with consequent sliding of the safety release member 1 on the mudguard 100, ensuring the safety of the user by preventing sudden wheel locking.

It has been verified in practice how the safety release member, particularly for single stay and mudguard, according to the finding, fully accomplishes the predetermined task since it permits engaging a single support stay with a mudguard without the aid of screws or accessories and in very reduced times, while ensuring maximum user safety.

The safety release member as conceived is susceptible to numerous modifications and variants, all falling within the scope of the inventive concept; moreover, all details can be substituted by other technically equivalent elements.

In practice, the material employed can be of any type, provided that they are compatible with the specific use; also the contingent dimensions and forms can be of any type according to needs and the state of the art.

## Claims

1. Safety release member (1), particularly for a single stay and mudguard (100), comprising a main body, removably engageable with said mudguard, said main body comprising fit coupling means for removably engaging said single stay to said main body and
an inner portion (2) and an outer portion (3), facing each other and united in a single body, said inner portion being associable to the underside part of said mudguard and said outer portion being associable to the back part of said mudguard wherein said fit coupling means comprise at least one housing (5) defined inside said main body, said housing being adapted to receive the head of said single stay (200), said single stay being substantially fork shaped and being composed of a pair of support stems (201a, 201b) united in a single body with said head, said safety release member being
**characterised in that** said fit coupling means comprise a slot (6) defined on said main body at said housing (5) which it is facing, said slot (6) having a form which is substantially complementary to the profile of said head.

2. Safety release member, according to one or more of the preceding claims, **characterised in that** said main body comprises a guide (4), with cross section substantially complementary to the cross section of said mudguard so to slidably associate said main body to said mudguard, said guide being jointly defined by said outer portion and said inner portion.

3. Safety release member, according to one or more of the preceding claims, **characterised in that** said main body comprises snap engagement means for removably snap engaging said main body with said mudguard, stopping the related sliding.

4. Safety release member, according to claim 3 **characterised in that** said snap engagement means comprise at least one tooth defined inside said guide, said tooth being snap engageable with at least one notch to be defined on said mudguard, said notch having a form which is substantially complementary to the form of said tooth.

5. Safety release member, according to one or more of the preceding claims, **characterised in that** said snap engagement means comprises at least one projection defined centrally inside said guide, said projection being snap engageable with a suitable slit defined on said mudguard, said slit having a form which is substantially complementary to the form of said projection.

6. Safety release member, according to one or more of the preceding claims, **characterised in that** said housing is defined on said outer portion and said slot is defined on said inner portion.

7. Safety release member, according to one or more of the preceding claims, **characterised in that** said housing is defined on said inner portion and said slot is defined on said outer portion.

8. Safety release member, according to one or more of the preceding claims, **characterised in that** it is made of moulded synthetic material.

## Patentansprüche

1. Sicherheitsauslösevorrichtung (1), insbesondere für Stützstange und Schutzblech (100), mit einem Hauptkorpus, der lösbar an dem Schutzblech anbringbar ist, wobei der Hauptkorpus geeignete Verbindungsmittel zum lösbaren Anbringen der Stützstange an dem Hauptkorpus aufweiset, sowie einem Innenteil (2) und einem Außenteil (3), die einander zugewandt und einteilig ausgeführt sind, wobei das Innenteil mit dem unteren Teil des Schutzbleches verbindbar und das Außenteil mit dem hinteren Teil des Schutzbleches verbindbar ist, wobei die geeigneten Verbindungsmittel wenigstens ein innerhalb des Hauptkorpus definiertes Gehäuse (5) umfassen, wobei das Gehäuse so angepasst ist, dass es den Kopf der Stützstange (200) aufnimmt, wobei die Stützstange im Wesenlichen gabelförmig ausgestaltet ist und aus einem Paar Halteschäften (201a, 201b) besteht, die einteilig mit dem Kopf ausgebildet sind, wobei die Sicherheitsauslösevorrichtung **dadurch gekennzeichnet ist, dass** die geeigneten Verbindungsmittel einen an dem Hauptkorpus an dem ihm zugewandten Gehäuse (5) definierten Schlitz (6) umfassen, wobei der Schlitz (6) eine Form besitzt, die im Wesentlichen komplementär zum Profil des vorgenannten Kopfes ist.

2. Sicherheitsauslösevorrichtung nach einem oder mehreren der vorstehenden Ansprüche, **dadurch gekennzeichnet, dass** der Hauptkorpus eine Führung (4) umfasst, deren Profil im Wesentlichen komplementär zum Profil des Schutzblechs ist, so dass der Hauptkorpus gleitend mit dem Schutzblech verbindbar ist, wobei die Führung durch das Außenteil und das Innenteil gemeinsam definiert wird.

3. Sicherheitsausläsevorrichtung nach einem oder mehreren der vorstehenden Ansprüche, **dadurch gekennzeichnet, dass** der Hauptkorpus Rastverbindungsmittel zum lösbaren Rastverbinden des Hauptkorpus mit dem Schutzblech umfasst, um das zugehörige Gleiten zu blockieren,

4. Sicherheitsauslösevorrichtung nach Anspruch 3, **dadurch gekennzeichnet, dass** die Rastverbindungsmittel wenigstens einen innerhalb der Führung definierten Zahn umfassen, wobei der Zahn in wenigstens eine an dem Schutzblech zu definierende Kerbe einrastet, wobei die Kerbe eine Form besitzt, die im Wesentlichen komplementär zur Form des Zahns ist,

5. Sicherheitsauslösevorrichtung nach einem oder mehreren der vorstehenden Ansprüche, **dadurch gekennzeichnet dass** die Rastverbindungsmittel wenigstens einen mittig innerhalb der Führung definierten Vorsprung umfassen, wobei der Vorsprung mittels Einrasten mit einem geeigneten an dem Schutzblech definierten Schlitz verbindbar ist, wobei der Schlitz eine Form besitzt, die im Wesentlichen komplementär zur Form des Vorsprungs ist.

6. Sicherheitsauslösevorrichtung nach einem oder mehreren der vorstehenden Ansprüche, **dadurch gekennzeichnet, dass** das Gehäuse an dem Außenteil definiert ist und der Schlitz an dem innenteil definiert ist.

7. Sicherheitsauslösevorrichtung nach einem oder mehreren der vorstehenden Anspruche, **dadurch gekennzeichnet, dass** das Gehäuse an dem Innenteil definiert ist und der Schlitz an dem Außenteil definiert ist.

8. Sicherheitsauslösevorrichtung nach einem oder mehreren der vorstehenden Ansprüche, **dadurch gekennzeichnet, dass** das sie aus geformtem Kunststoff besteht,

## Revendications

1. Elément de déclenchement de sécurité (1) en particulier pour une tringle de garde-boue (100), comprenant un corps principal, pouvant être mis en prise de manière amovible avec ledit garde-boue, ledit corps principal des moyens de couplage appropriés pour mettre en prise de manière amovible ladite tringle sur ledit corps principal, et
une partie interne (2) et une partie externe (3) se faisant face et réunies en un seul corps, ladite partie interne pouvant être associée à la partie inférieure dudit garde-boue et ladite partie externe pouvant être associée à la partie arrière dudit garde-boue,
dans lequel lesdits moyens de couplage appropriés comprennent au moins un boîtier (5) défini à l'intérieur dudit corps principal, ledit boîtier étant adapte pour recevoir la tête de ladite tringle (200), ladite tringle étant sensiblement en forme de fourche et étant composée d'une paire de tiges de support (201a, 201b) réunies en un seul corps avec ladite tête, ledit élément de déclenchement de sécurité étant **caractérisé en ce que** lesdits moyens de couplage appropriés comprennent une tente (6) définie sur ledit corps principal au niveau dudit boîtier (5) qui lui fait face, ladite tente (6) ayant une forme qui est sensiblement complémentaire du profil de ladite tête.

2. Elément de déclenchement de sécurité selon une ou plusieurs des revendications précédentes, **caractérisé en ce que** ledit corps principal comprend un guide (4) avec une section transversale sensiblement complémentaire de la section transversale dudit garde-boue afin d'associer de manière coulissante ledit corps principal audit ledit guide étant défini conjointement ladite partie externe et ladite partie interne.

3. Elément de sécurité selon une ou plusieurs des revendications précédentes, **caractérisé en ce que** ledit corps principal comprend des de mise en prise à encliquetage pour mettre en prise pair encliquetage de manière amovible ledit corps principal avec ledit garde-boue, arrêtant le coulissement relatif.

4. Elément de sécurité selon la revendication 3, **caractérisé en ce que** lesdits moyens de mise en prise par encliquetage comprennent au moins une dent définie à l'intérieur dudit guide, ladite dent pouvant être mise en prise par encliquetage avec au moins une encoche à définir sur ledit garde-boue, ladite encoche ayant une forme qui est sensiblement de la forme de ladite dent.

5. Elément de déclenchement de sécurité selon une ou plusieurs des revendications précédentes, **caractérisé en ce que** lesdits moyens de mise en prise par encliquetage comprennent au moins une saillie définie au centre à l'intérieur dudit guide, ladite saillie pouvant être mise en prise par encliquetage avec une fente appropriée définie sur ledit garde-boue, ladite fente ayant une forme qui est sensiblement complémentaire de la forme de ladite saillie.

6. Elément de déclenchement de sécurité selon une ou plusieurs des revendications précédentes, **caractérisé en ce que** ledit boîtier est défini sur ladite partie externe et ladite fente est définie sur ladite partie interne.

7. Elément de déclenchement de sécurité selon une ou plusieurs des revendications précédentes, **caractérisé en ce que** ledit boîtier est défini sur ladite partie interne est ladite fente est définie ladite partie externe.

8. Elément de déclenchement de sécurité selon une ou plusieurs des revendications précédentes, **caractérisé en ce qu'**il est réalisé avec un matériau synthétique moulé.
